# EUROPEAN PATENT APPLICATION

(11) **EP 4 684 921 A2**
(43) Date of publication of application: **28.01.2026**
(21) Application number: 25208642.6
(22) Date of filing: 29.05.2019
(51) Int. Cl.: B25F 5/02

(54) **FASTENER INSTALLATION TOOLS, SYSTEMS AND METHODS**

(30) Priority: 29.05.2018 US 201815991099
(62) Divisional of application: 19177223.5
(71) Applicant: Simpson Strong-Tie Company Inc, Pleasanton, California 94588 (US)
(72) Inventor: TILLINGHAST, Adam, Pleasanton, 94588 (US); HALE, Troy, Pleasanton, 94588 (US)
(74) Representative: Fuchs Patentanwälte Partnerschaft mbB

(57) **Abstract**

Installation tools systems and methods for use with an elongated adapter. The elongated adapters have a proximal end and a distal end; and a driver which generates torque mounted to a first end of the elongated adapter; a torque transfer unit engaging the elongated adapter and the driver to transfer torque produced by said driver to a fastener. Fastener installation tools engaging the distal end of the elongated adapter include a first member wherein the first member has a distal end and two projection elements positioned in a plane and a channel between the projection elements further wherein at least one of the first members has a notch at a distal end on a channel-facing side, a positioning member formed integrally with the first member wherein the positioning member has a linear marker on a first side, an angled marker on a second side, and a rocker positioned between the angled marker and the channel.

## Description

### BACKGROUND

**Field:** The present disclosure relates to generally tools and methods for fastening structural members during construction. More specifically, the disclosed tools and methods install fasteners to wood framing components including trusses such as rafters, ridge boards, tie beams. chords, joists, top plates, posts, studs, and struts.

**Background:** Building codes are typically based on a set of universal building codes such as the International Residential Code and the International Building Code. The universal building codes set forth requirements for securing wooden framing components during construction. The codes typically require that the top plate and the roof trusses, such as rafters, be connected to comply with pre-established connection force standards calculated to resist substantial uplift forces that may be experienced throughout the lifetime of the structure. For locations which are susceptible to high wind uplift and/or seismic activity, a stronger force-resistant connection between the top plate and trusses may be required by local building codes. A number of techniques, fasteners and hardware items can be employed to provide the required connection between, for example, a top plate and the roof trusses.

To secure framing components with sufficient retentive force, each threaded fastener is, for example, driven through a top plate and into the rafter at about a 22.5 degree angle with respect to the vertical. Although securing multiple threaded fasteners is typically more efficient than attaching a hurricane clip or other strap-type connector, it is difficult to consistently implement a 22.5 degree angle within a reasonable range of precision. While protractors, levels and other tools can be used, in practice such tools are clumsy, difficult to use in the field, and time consuming.

There is a need for a tools and methods that facilitate the use of threaded fasteners to connect building framework components at a consistent angle which is easy to use.

The present disclosure addresses the need for tools and methods to efficiently installing multiple threaded fasteners having a consistently precise optimum connection angle.

### SUMMARY

An aspect of the disclosure is directed to fastener installation systems. The fastener installation systems can be modular and enable a user to achieve installation of a fastening member without getting on a ladder. Suitable fastener installation systems are configurable for fastening a first member to a second member comprising: an elongated adapter having a proximal end and a distal end; a driver which generates torque mounted to a first end of the elongated adapter; a torque transfer unit engaging the elongated adapter and the driver to transfer torque produced by said driver to a fastener; and a fastener installation tool engaging the distal end of the elongated adapter having a body comprising: a first member wherein the first member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end; and at least one of a linear marker on an exterior surface of the body in the first plane and an angled marker on the exterior surface of the body in the second plane. The tube assembly can be a telescoping tube assembly. Additionally, the telescopic tube assembly can further comprise a keyway. In some configurations, the telescoping tube assembly comprises a first tubular member configurable to engage the driver and slidably engageable with a second tubular member. At least one of the first members has a notch at a distal end on a channel-facing side. A position indicator tool can also be provided. The position indicator tool can be configured to removably engaging the elongated adapter. Additionally, the position indicator tool can further comprises a pair of mounting members engaging a partially fluid filled vial. In some configurations, the position indicator tool further comprises a laser pointer. The driver can be one of a battery powered drill and a drill with an electrical cord. The rocker presents a curved surface along a plane of the fastener installation tool, In use, the rocker allows the fastener installation tool control an angle of installation by maintaining contact of the rocker on an installation surface while rotating the device relative to the installation surface.

Another aspect of the disclosure is directed to fastener installation tools. Suitable fastener installation tools are configurable to engage the distal end of the elongated adapter having a body comprising: a first member wherein the tangential member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end. In at least some configurations, at least one of the first members has a notch at a distal end on a channel-facing side. Additionally, the distal end of the first member is one of curved, flat, angled, and tapered. The positioning member can be configured to include a rocker positioned along a length of the positioning member between a channel face of the first member and a distal end of the positioning member on a first side. Additionally, the positioning member can have a second rocker positioned along a length of the positioning member between the channel face of the first member and the distal end of the positioning member on a second side. In at least some configurations, the rocker has an hourglass shape. At least one of the linear marker on an exterior surface in the first plane and the angled marker on the exterior surface in the second plane can be visually distinct from a remainder of the body of the fastener installation tool. Additionally, the linear markers can be positioned on a first side of the body and a second side of the body. In some configurations, the linear marker has a length greater than 50% of the length of the body of the fastener installation tool. The angled marker can also be positioned on a first side of the body and a second side of the body. In some configurations, the angled marker can be positioned proximal to the rocker.

Yet another aspect of the disclosure is directed to fastener installation tools configurable to engage a distal end of an elongated adapter. Suitable fastener installation tools have a body comprising: a first member wherein the engagement member has a substantially planar profile in a first plane; a positioning member formed integrally with the first member wherein the positioning member has a rocker positioned along a length of the positioning member between a channel face of the first member and a distal end of the positioning member on a first side; an axial channel passing from the distal end of the fastener installation tool to the proximal end. In some configurations, at least one of the first members has a notch at a distal end on a channel facing side. Additionally, the distal end of the first member is one of curved, flat, angled, and tapered. The positioning member can also have a second rocker positioned along a length of the positioning member between the channel face of the first member and the distal end of the positioning member on a second side. In some configurations, the rocker has an hourglass shape. Additionally, the tools can comprise at least one of a linear marker on an exterior surface of the body in the first plane and an angled marker on the exterior surface of the body in the second plane. At least one of the linear marker on an exterior surface in the first plane and the angled marker on the exterior surface in the second plane are visually distinct from a remainder of the body of the fastener installation tool. The linear marker can also be positioned on a first side of the body and a second side of the body. The linear marker can also have a length greater than 50% of the length of the body of the fastener installation tool. In some configurations, the angled marker is positioned on a first side of the body and a second side of the body. The angled marker can also be positioned proximal to the rocker.

Still other aspects of the disclosure are directed to removable position indicator tools. Suitable position indicator tools comprise: a semicircular body having a first end, a second end, a convex exterior surface, and a concave interior surface; a mounting member extending from the convex exterior surface; and wherein at least one of the first end and the second end has a tongue and groove shaped surface. In some configurations, a sealed vial secured by the mounting member and/or a laser pointer secured by the mounting member. Additionally, the position indicator tool can further comprise at least one flange. Additionally, the mounting member further comprises a first mounting member and a second mounting member and further wherein the first mounting member is positioned on the convex exterior surface in a first position and the second mounting member is positioned on the convex exterior surface in a second position offset by about 1.97 inch to the central axis of the removable position indicator tool.

Another aspect of the disclosure is directed to methods of installing fasteners to framing components. Methods include coupling a fastener installation tool of the disclosure to a driver. In some methods, the fastener installation tool can be coupled to an adapter which in turn is coupled to a driver. In still other methods, the fastener installation tool of the disclosure is coupled to a driver and separated from the driver by one or more extension components which are connected via one or more extension connectors. In still other methods, one or more position indicator tools can engage an adapter or an extension component. In use, the fastener installation tool of the disclosure can be used with a drive at a variety of distances away from a user, enabling the user to install fasteners at a plurality of distances without, for example, climbing on a ladder.

### INCORPORATION BY REFERENCE

All publications, patents, and patent applications mentioned in this specification are herein incorporated by reference to the same extent as if each individual publication, patent, or patent application was specifically and individually indicated to be incorporated by reference.
**ARMSTRONG CEILING SYSTEMS,** Installation Manual for Lay-in Modular Ceiling;
**GemRed 82302** Digital Level Angle Finder Protractor Goniometer with Metal Moving Blade & Vial;
**JOHNSON,** 21" Digital Magnetic Level & Angle Locator with Dot Laser, Model 40-6065;
CN-202922337-U published on 5/8/2013 by He Yong;
FR-3029128-A1 published on 6/3/2016 by Gissinger et al.;
US-2010/0213237-A1 published on 8/26/2010 by Tebo;
US-2012/0204409-A1 published on 8/16/2012 by Vandenberg;
US-2014/0161561-A1 published on 6/12/2014 by Tebo;
US-3,864,839-A issued on 2/11/1975 by Wolf;
US-4,132,496-A issued on 1/2/1979 by Casto;
US-4,785,544-A issued on 11/22/1988 by Heinsius et al.;
US-4,922,621-A issued on 5/8/1990 by Maier;
US-4,945,799-A issued on 8/7/1990 by Knetzer;
US-5,361,504-A issued on 11/8/1994 by Huang;
US-5,740,705-A issued on 4/21/1998 by Graham;
US-5,791,207-A issued on 8/11/1998 by Ahdoot;
US-6,109,145-A issued on 8/29/2000 by Habermehl;
US-6,301,997-B1 issued on 10/16/2001 by Welte;
US-6,363,818-B1 issued on 4/2/2002 by Habermehl;
US-6,425,306-B1 issued on 7/30/2002 by Habermehl;
US-6,470,579-B2 issued on 10/29/2002 by Allen;
US-6,493,085-B1 issued on 12/10/2002 by Pfeifer et al.;
US-6,550,152-B2 issued on 4/22/2003 by Myrick;
US-6,647,836-B1 issued on 11/18/2003 by Habermehl;
US-6,862,963-B2 issued on 3/8/2005 by Habermehl et al.;
US-6,990,731-B2 issued on 1/31/2006 by Haytayan;
US-7,194,812-B2 issued on 3/27/2007 by Davis;
US-7,278,223-B1 issued on 10/9/2007 by Dever et al.;
US-7,341,146-B2 issued on 3/11/2008 by Habermehl;
US-7,530,175-B2 issued on 5/12/2009 by Strutt et al.;
US-7,987,608-B2 issued on 8/2/2011 by Rowe;
US 8,256,104 B2 issued September 4, 2012 by Fulbright;
US-8,376,203-B2 issued on 2/19/2013 by Martel et al.;
US-8,403,194-B2 issued on 3/26/2013 by Tebo;
US-8,955,210-B2 issued on 2/17/2015 by Vandenberg;
US-9,144,896-B2 issued on 9/29/2015 by Vandenberg; and
US-9,452,514-B2 issued on 9/27/2016 by Guthrie et al.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**FIGS. 1A-F** illustrate a fastener installation tool;
**FIGS. 2A-D** illustrate a configuration of a level tool;
**FIGS. 3A-D** illustrate another configuration of a level tool;
**FIG. 4A** illustrates the fastener installation tool with a driver and a telescoping adapter;
**FIG. 4B** is a close-up of a portion of the telescoping adapter;
**FIG. 4C** is a close-up of a proximal end of the telescoping adapter;
**FIG. 4D** is a cross-section of the fastener installation tool of **FIG. 4A****;**
**FIGS. 5A-E** illustrate fastener installation tools in use;
**FIG. 6** illustrates a handle engaging a level tool at a proximal end; and
**FIGS. 7A-E** illustrate a fastener installation too connected to an adapter **(****FIG. 7A****),** the fastener installation tool removed from the adapter **(****FIG. 7B****),** the fastener installation tool engaging an extension without the adapter engaged**(****FIG. 7C****),** .the fastener installation tool engaging both the extension and the adapter **(****FIG. 7D****);** and a cross-section of the fastener installation tool engaging the extension and the adapter **(****FIG. 7E****).**

### DETAILED DESCRIPTION

### FASTENER INSTALLATION TOOLS

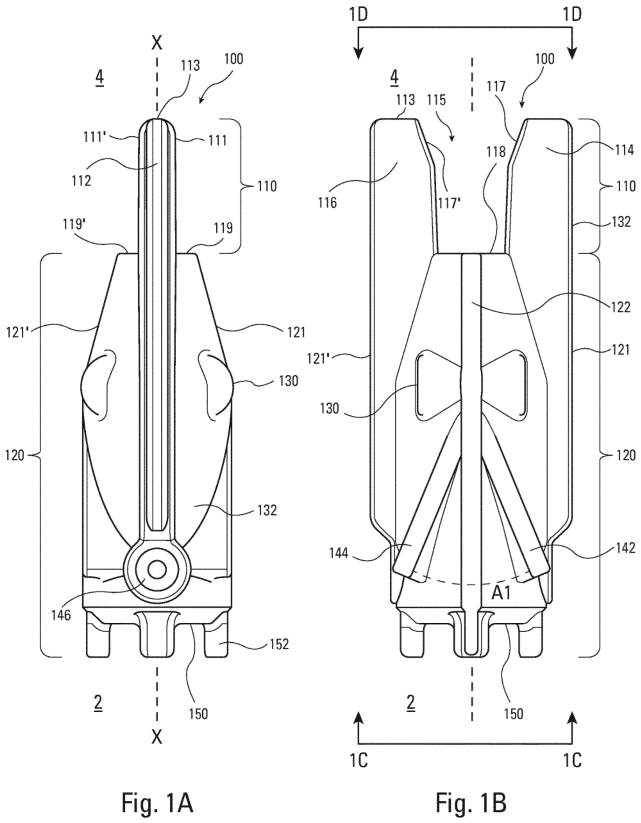

**FIGS. 1A-F** illustrate a fastener installation tool **100.** **FIG. 1A** is a first planar view of the fastener installation tool **100.** The fastener installation tool **100** has a proximal end **2** and a distal end **4.** The distal end **4** has a first thickness in the first planar view of **FIG. 1A** that is different that the thickness of the proximal end **2** in the first planar view. The distal most end of the fastener installation tool **100** forms an engagement member **110** with an upper surface **111** and a lower surface **111'.** Upper surface **111** and the lower surface **111'** can be parallel to each other, or substantially parallel, when viewed in the first planar view. The length of the engagement member **110** is from about 0.90 inches to about 1.25 inches, preferably about 0.975 inches, and the thickness is from about 0.200 inches to about 0.400 inches, preferably about 0.300 inches.

The distal most end **113** of the engagement member **110** can be configured to have a rounded end (as shown). In another configuration, the distal most end **113** can be, for example, flat (e.g., an end which is perpendicular to the upper surface **111** and lower surface **111'),** pointed, tapered, or angled. A linear marker **112** can be provided which forms a line along at least a portion of the length the fastener installation tool **100.** The linear marker **112** can have a length that is, for example, 50% or greater of the overall length from the proximal end **2** to the distal end **4** of the fastener installation tool **100.** The linear marker **112** can be achieved by using a surface treatment, applying a coating, or by over-molding. Thus, for example, achieving a result where the overall fastener installation tool **100** is one color (e.g., black) and the linear marker **112** is another color (e.g., orange). The linear marker **112** is configured to be visually distinct from the remainder of the fastener installation tool **100.**

The proximal end **2** of the engagement member **110** is formed integrally with a positioning member **120** such that the proximal end **2** is either made from one piece with the positioning member **120** or operates as a single piece when the fastener installation tool **100** is in a final assembly. The positioning member **120** increases in thickness at a neck **119, 119'.** Each side of the positioning member **120** has a substantially flat positioning member **121, 121'.**

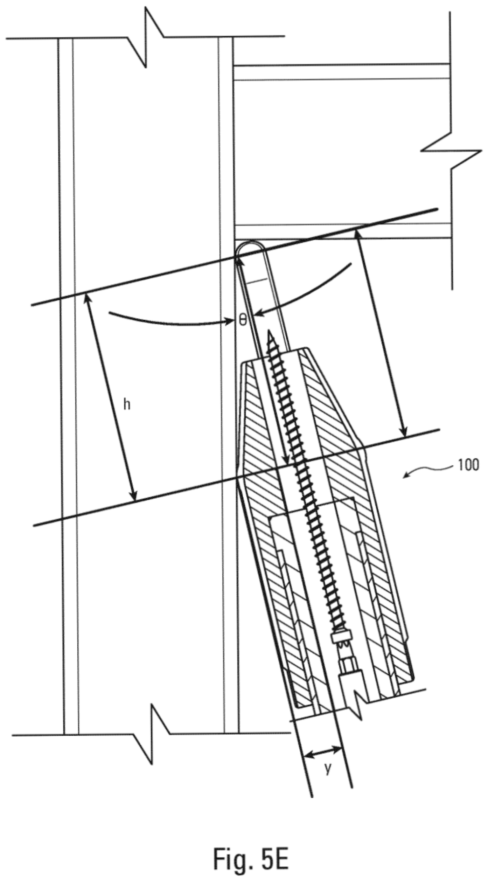

A rocker **130** is positioned approximately halfway along the length of the positioning member **120** between the proximal end **2** to the distal end **4.** An angle e is an angle at which the fastener is installed (see **FIG. 5E****).** The measure of the angle is proportionate to a distance between the rocker **130** contact location and the distal end **113.** As would be appreciated by those skilled in the art, the size and position of the rocker is relative to the size and position of the engagement member **110.**

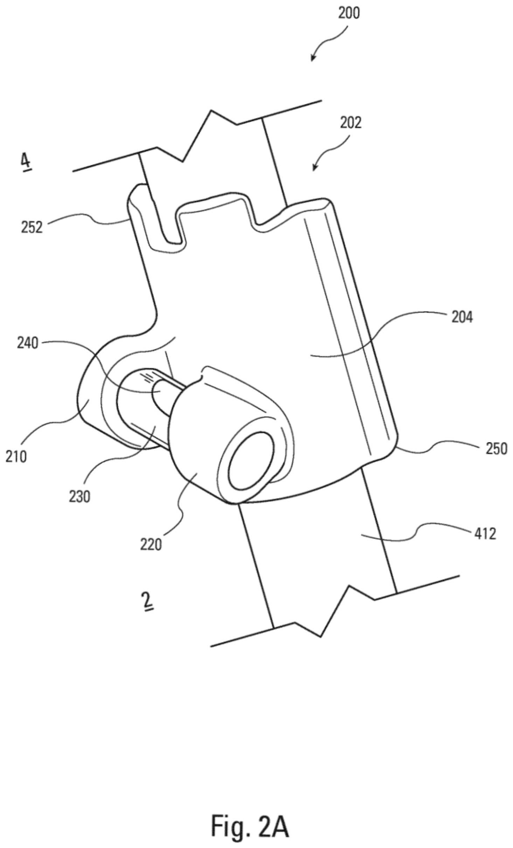

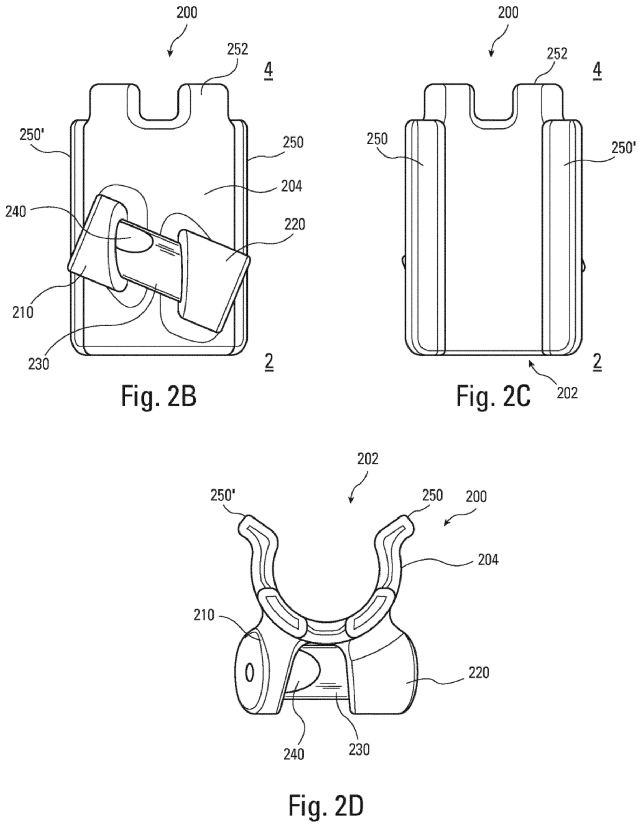

The rocker **130** forms a curved surface that extends from the substantially flat surface of the flat positioning member **121, 121'.** The rocker **130** can be a curved surface, as illustrated, that provides a fulcrum which allows the fastener installation tool **100** to be positioned with respect to the target surface, such as a rafter. This allows the user to pivot the distal end **4** of the fastener installation tool **100** back-and-forth along an axis from the proximal end **2** to the distal end **4.** A tongue and groove shape **150, 152** can be provided at the proximal end **2** of the fastener installation tool **100.** The tongue and groove shape **150, 152** can be used, for example, to align the fastener installation tool with a level tool such as those shown in **FIGS. 2-3****.**

An aperture **146** is provided that passes from one side of the fastener installation tool **100** to the opposing side. The aperture **146** allows an attachment member, such as a screw, to pass through. The aperture **146** can be positioned at a 90 degree angle from the longitudinal axis of the fastener installation tool **100** or at an angle 90 degrees from what is shown. The aperture **146** allows, for example, a screw to pass through to secure the fastener installation tool **100** to the telescoping member.

The length of the positioning member **120** is from about 2.0 inches to about 4.0 inches, preferably about 3.0 inches. The thickness of the positioning member **120** is from about 0.40 inches to about 0.75 inches, preferably about 0.610 inches, at its distal end and from about 0.90 inches to about 1.125 inches, preferably about 1.115 inches, at its proximal end. The rocker **130** extends from the surface of the positioning member from about 0.40 inches to about 0.75 inches, preferably about 0.565 inches. Typically, the dimensions are proportional, such that the distance between the points of contact with, for example, the stud, result in a predetermined angle of installation. A suitable range for angle of installation is, for example, between 4 and 14 degrees when a rafter is centered over a stud.

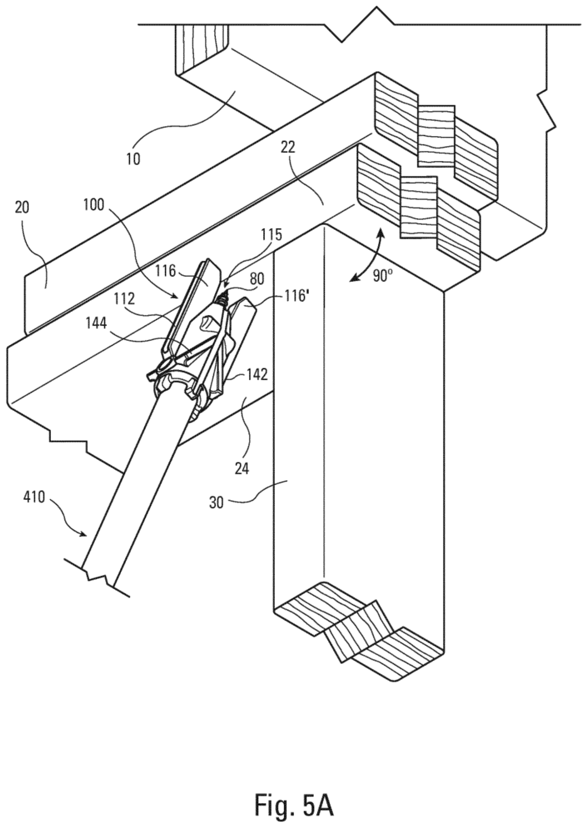

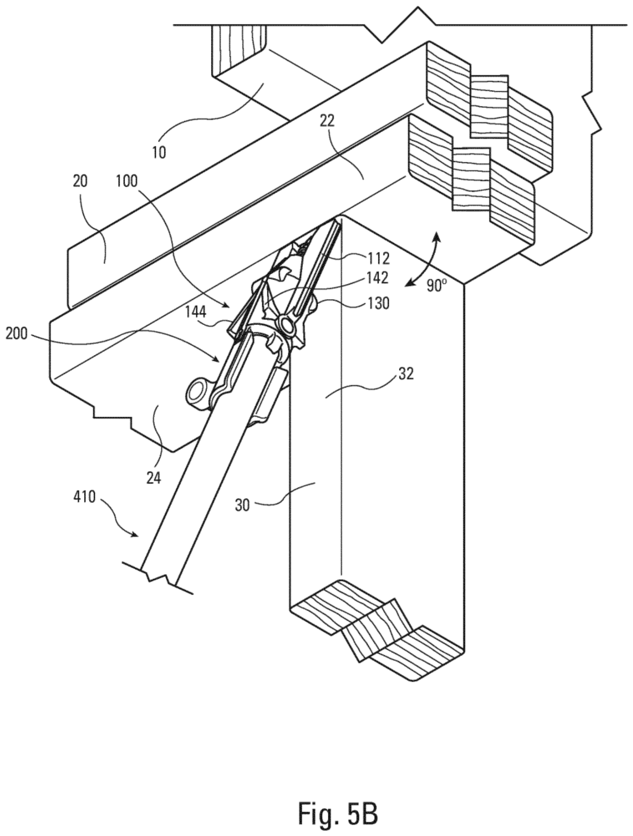

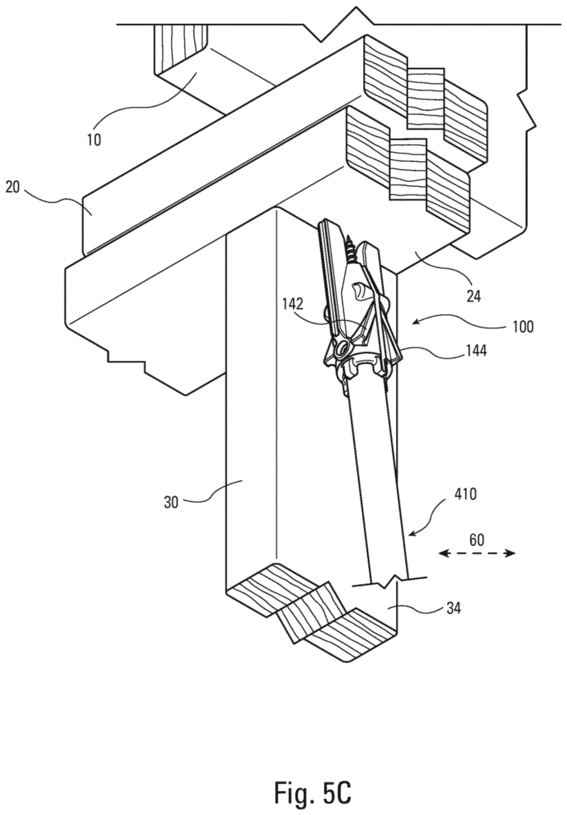

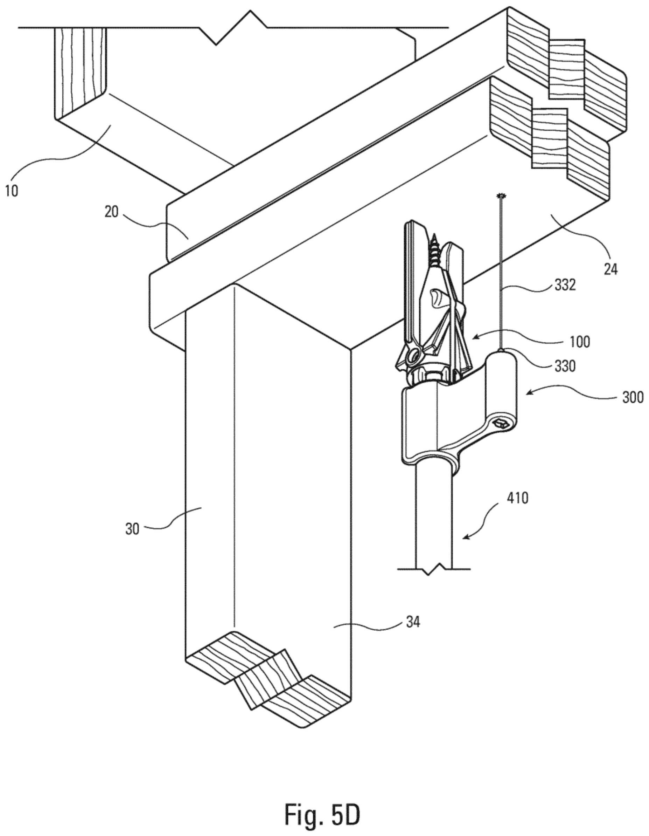

**FIG. 1B** is a planar view of the fastener installation tool **100** rotated perpendicularly 90 degrees about the x axis of the view of **FIG. 1A****,** where the x axis refers generically to an axis which can be in any of the x-y-z direction. The engagement member **110** which appears as a solid member in the first plane shown in **FIG. 1A** has projections **114, 116** with a channel **115** in between the projections **114, 116** in a second plane. The channel **115** between the projections **114, 116** has a channel face **118** at the proximal end. The channel face **118** can be perpendicular to the projections **114, 116.** Additionally, the projections **114, 116** can have parallel, or substantially parallel, sides which face each other within the channel **115** as illustrated. In other configurations the projections **114, 116** are not parallel. The channel **115** has a length of about 0.75 inches to about 1.115 inches, preferably about 0.975 inches, from the distal end of the fastener installation tool **100** and a width of about 0.30 inches to about 0.40 inches, preferably about 0.500 inches, between the projections **114, 116.** Other shapes of the channel face **118** can be employed without departing from the scope of the disclosure including but not limited to convex, concave, sloped, and angled. The distal end **4** of the projections **114, 116** can have an interiorly positioned notch **117, 117'** on one or both projections **114, 116** facing into the channel **115.** The positioning member **120** has a pair of angled markers **142, 144.** The pair of angled markers **142, 144** can be achieved by surface treatment, applying a coating, or over-molding. Thus, for example, achieving a result where the overall device is one color (e.g., black) and the angled markers **142, 144** are another color (e.g., orange). The pair of angled markers **142, 144** are configured to be visually distinct from the remainder of the fastener installation tool **100.** The angle **A1** between the angled markers **142, 144** is from about 35 degrees to about 55 degrees, preferably about 45 degrees. The angled markers **142, 144** are angled to a degree off of a linear axis between the proximal end **2** and the distal end **4** to allow the user to visually determine when one of the angled markers **142, 144** is parallel to a vertical member or parallel a horizontal member (shown in **FIG. 5****).**

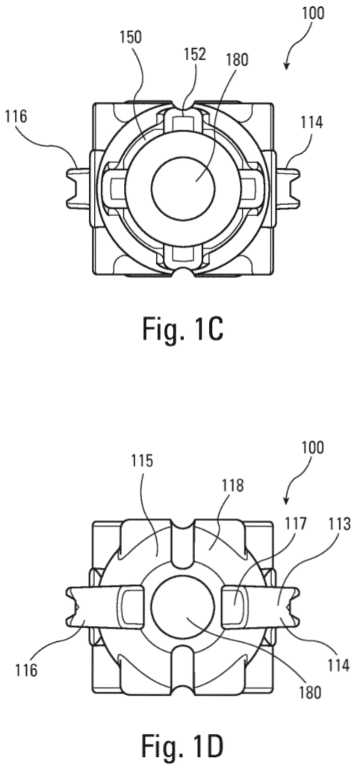

**FIG. 1C** is a view of the fastener installation tool **100** of **FIGS. 1A-B** from the proximal end **2.** An axial channel **180** which passes through the fastener installation tool **100** from the proximal end 2 to the distal end **4** is provided through which a fastener (shown in **FIG. 5****)** passes during use of the fastener installation tool **100.**

**FIG. 1D** is a view of the fastener installation tool **100** of **FIGS. 1A-B** from the distal end **4** down the axial channel **180.**

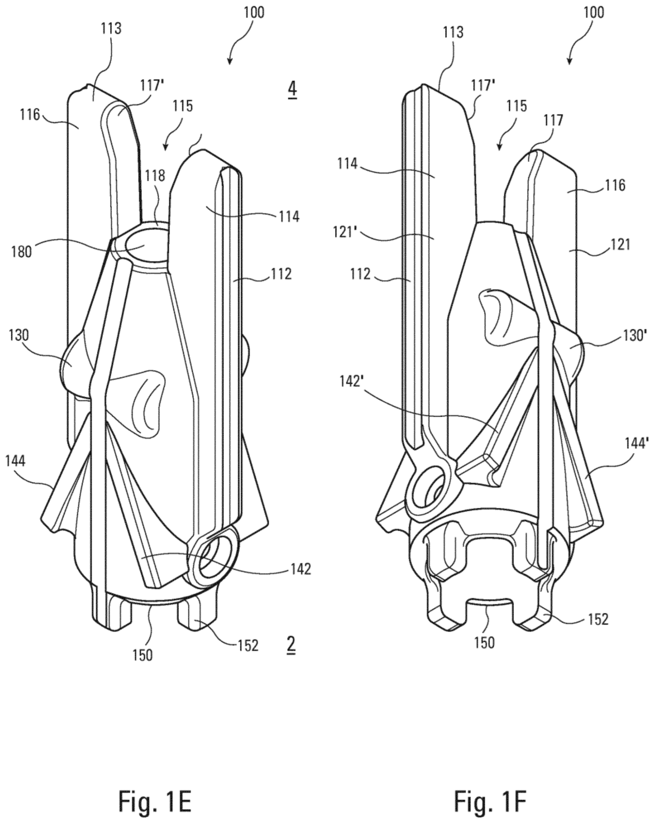

**FIGS. 1E-F** are perspective views of the fastener installation tool **100** of **FIGS. 1A-B****.**

### POSITION INDICATOR TOOLS

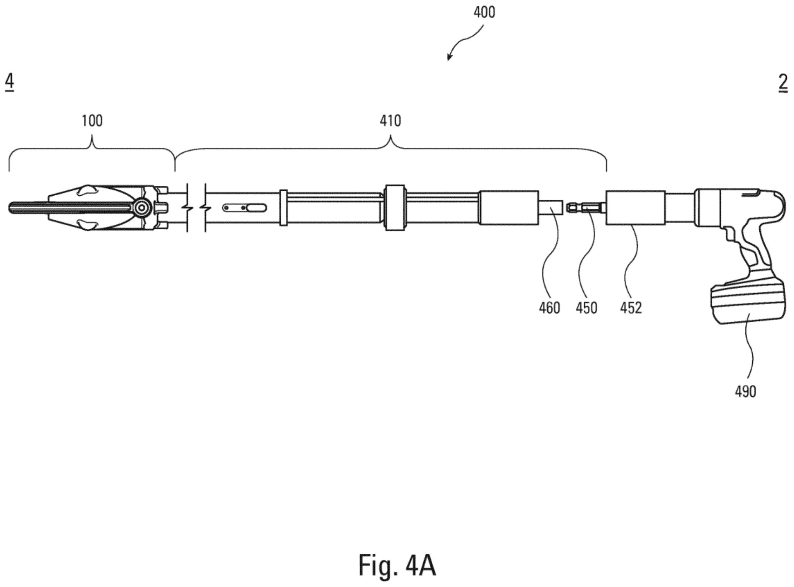

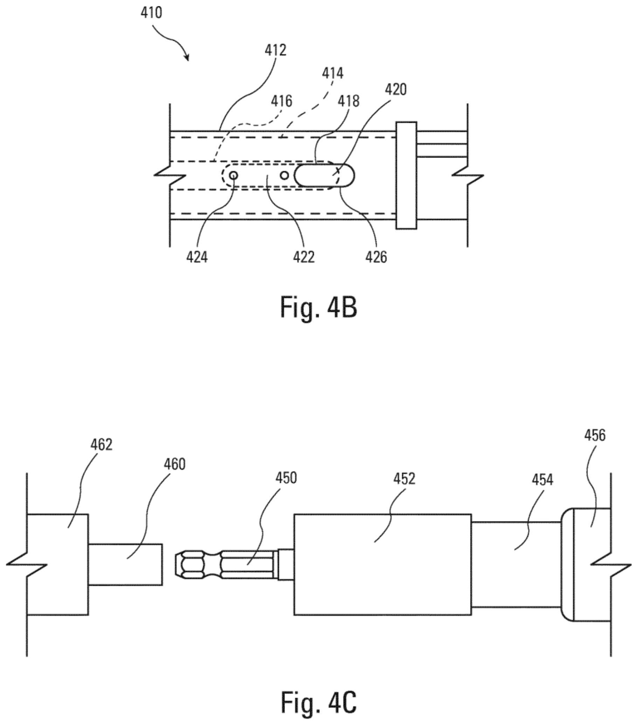

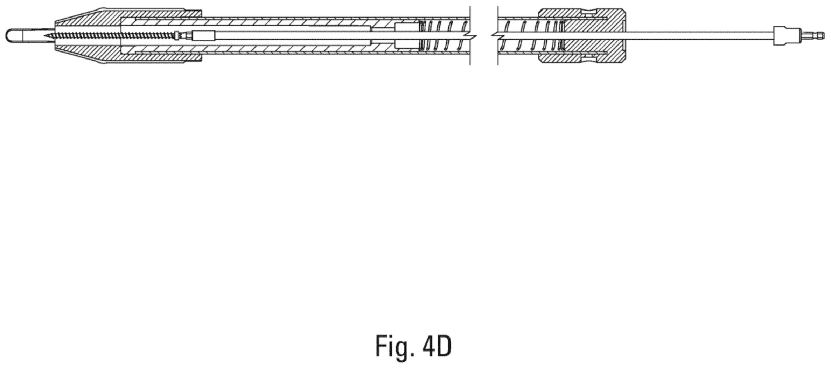

**FIGS. 2A-D** illustrate a configuration of position indicator tool such as a level tool **200.** The level tool **200** is configured to removably engage a tubular member **412** (shown in more detail in **FIG. 4****).** The level tool **200** has a length of from about 1.60 inches to about 2.10 inches, preferably about 1.886 inches, and a diameter of from about 0.90 inches to about 1.30 inches, preferably about 1.115 inches. The level tool **200** has a partial tubular shape having a curved interior surface which has an open end **202** along a length to allow the level tool **200** to engage a tubular member **412** as shown in **FIG. 2****.** The curved interior surface (shown in **FIG. 2D****)** has a length that is substantially the same as the overall length of the level tool **200,** and a diameter across a mid-line of about 0.6 inches to about 1.2 inches, preferably about 0.875 inches. The partial tubular shape can be from about 225 degrees of a 360 degree circle to about 275 degrees of a 360 degree circle, preferably about 250 degrees. Other shapes can be used without departing from the scope of the disclosure.

A flange **250, 250'** can be provided on either side of the open end **202** of the level tool **200** (i.e., the end that engages the tubular member **412).** Either or both flanges **250, 250'** which present a tongue and groove interface can extend along the entire length of the open end **202** of the level tool **200.** Flanges can be provided for ease of attachment to the tubular member. A bubble level is positioned on an exterior surface **204** of the level tool **200.** The bubble level has a vial **230** which is slightly curved and held by mounting members **210, 220** on either side of the vial **230.**

The mounting members **210, 220** extend from an exterior surface of the level tool **200.** As illustrated, the mounting members **210, 220** are not parallel one another on the exterior surface **204.** However, the mounting members **210, 220** can be parallel in some configurations. The mounting members **210, 220** are configurable to have a common axis through their center. One mounting member **210** is closer to the proximal end **2** while the other mounting member **220** is farther away from the proximal end **2** and closer to the distal end **4.** The spacing between the mounting members **210, 220** is such that a user has an unobstructed view of the bubble **240** in the vial during operation when the fastener installation tool **100** is at an optimum position for installing the fastener and an obscured view when the fastener installation tool **100** is not at an optimum position for installing the fastener.

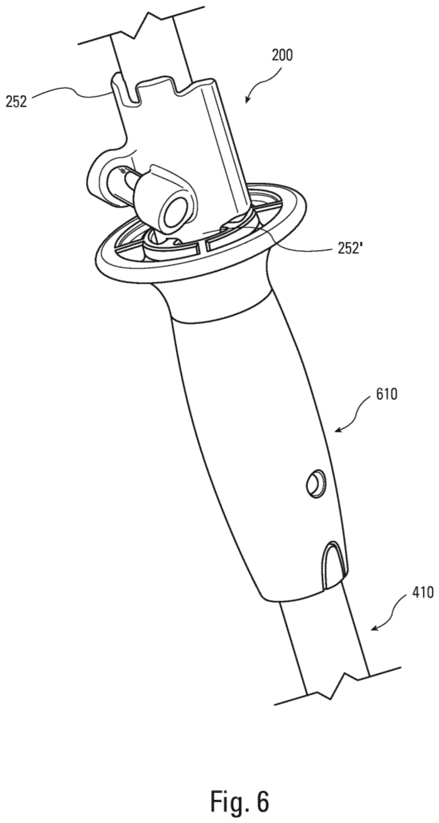

The vial **230** can be a curved glass or plastic vial. The vial **230** is incompletely filled with a liquid. Suitable liquid for the vial can be a colored liquid, such as a colored alcohol. The vial has a slight upward curve so that a bubble **240** in the fluid naturally rests at a center position along the length of the vial **230** when an axis of the vial **230** between an end engaging a first mounting member **210** and an end engaging a second mounting member **220** is either horizontal or vertical to, for example, a top plate **20** or a vertical stud **30** (shown in **FIG. 5****).** At slight inclinations, the bubble **240** travels away from center position of the vial **230** toward a first end or second end of the vial **230.** Movement of the bubble **240** within the vial **230** helps the user determine when a horizontal (level) or vertical (plumb) position has been achieved. An end of the level tool **200,** such as the distal end **4,** can have a tongue and groove **252** shape. The tongue and groove shape **252** can be used to align the level tool **200** with, for example, a fastener installation tool **100** of **FIG. 1****.** In other configurations, the end of the level tool **200** can be flat. **FIG. 6** illustrates a level tool **200** which has a tongue and groove shape **252** on both ends of the tool. The proximal end of the tongue and groove **252** can be configured to engage a handle **610** as illustrated in **FIG. 6****.**

**FIG. 2B** is a view of the level tool **200** of **FIG. 2A** from a first side showing a convex curved exterior surface and the offset positioning of the mounting members **210,220.** **FIG. 2C** is a view of the level tool **200** of **FIG. 2A** from a second side showing a concave curved interior surface. **FIG. 2D** illustrates the level tool **200** rotated 90 degrees from the view in **FIG. 2B**. From this view, the open end **202** with its semi-circular shape and flanges **250** that extend away from a centerline is apparent.

The mounting members **210, 220** can form an inverted "V" or "U" when viewed from the side as shown in **FIG. 2D****.** This orientation of the mounting members **210, 220** allows as much light as possible to pass through the vial, which provides for better visibility of the bubble for the user. In some configurations, a symmetrical part can be used from the right and the left which allows the flanges forming a tongue and groove surface to be positioned on both sides of the level tool **200.**

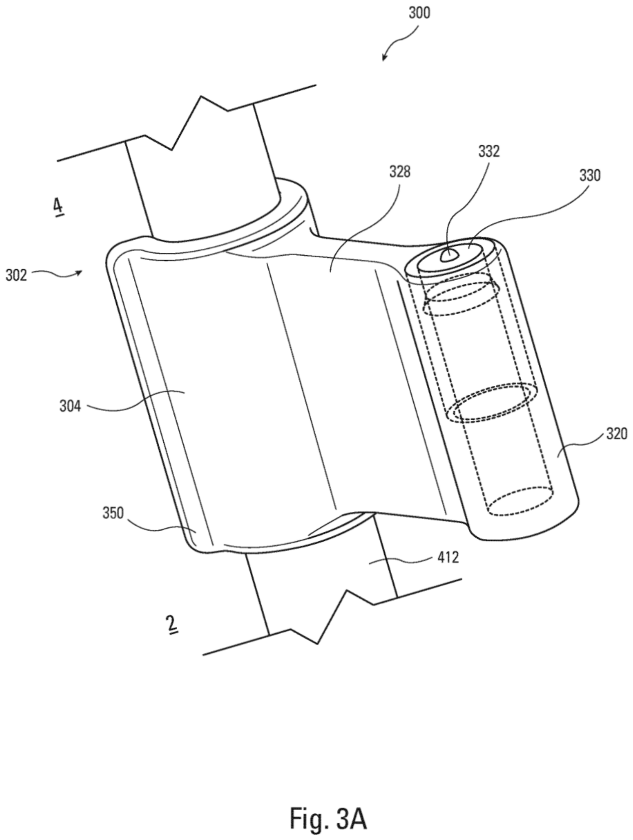

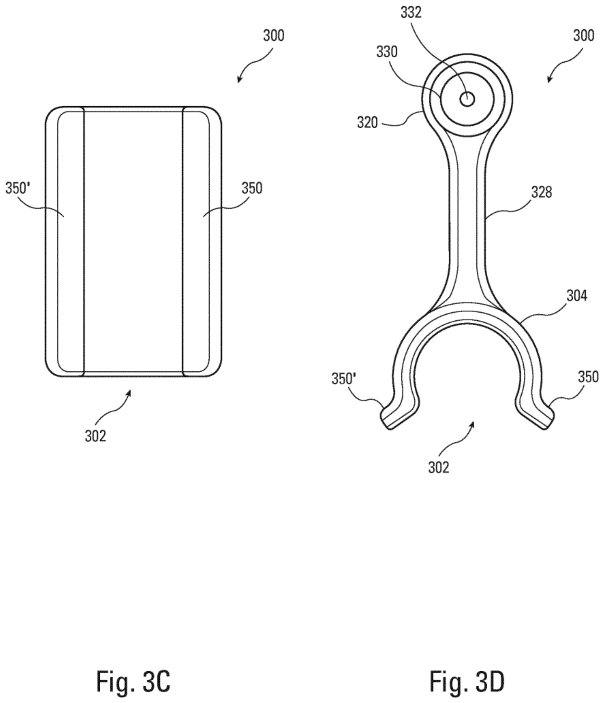

**FIGS. 3A-D** illustrate a configuration of a position indicator tool **300.** The position indicator tool **300** is configured to removably engage a tubular member **412** as shown in **FIG. 4****.** The position indicator tool **300** has a length of from about 1.60 inches to about 2.20 inches, preferably about 1.886 inches, and a diameter of from about 0.80 inches to about 1.20 inches, preferably about 1.0 inches. The position indicator tool **300** has a partial tubular shape having a curved interior surface which has an open end **302** along a length to allow the position indicator tool **300** to engage a tubular member **412** as shown in **FIG. 4****.** The curved interior surface (shown in **FIG. 3D****)** has a length of about 1.60 inches to about 2.20 inches, preferably about 1.886 inches, and a diameter across a mid-line of about 0.50 inches to about 1.0 inches, preferably about 0.75 inches. The partial tubular shape can be from about 225 degrees of a 360 degree circle to about 275 degrees of a 360 degree circle, preferably about 250 degrees. Other shapes can be used without departing from the scope of the disclosure.

A flange **350, 350'** can be provided on either side of the open end **302** of the level tool **300.** Either or both flanges **350, 350'** can extend along the entire length of the open end **302** of the position indicator tool **300.** A laser element **330** is positionable within mounting **320.** The mounting **320** is positioned on a connecting member **328** which is integrally formed on the exterior surface **304** of the position indicator tool **300.** The height of the laser element is such that the laser light still appears on the truss or rafter when the screw is being installed as described below in **FIG. 5C**. The ability to continue to visualize the laser light enables the user to ensure accurate placement of the fastener.

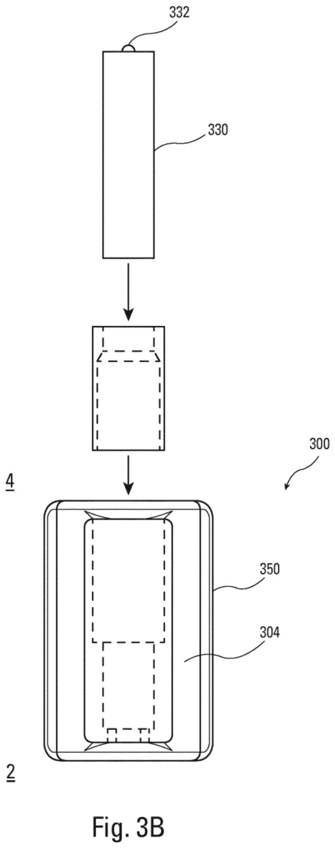

**FIG. 3B** is a view of the position indicator tool **300** of **FIG. 3A** from a first side showing a convex curved exterior surface. As shown in **FIG. 3B** the laser element **330** extends beyond the upper surface of the mounting **320.** To activate the laser element **330,** the laser element **330** is pushed out of the mounting **320.** As will be appreciated by those skilled in the art, activation of the laser can be achieved a variety of ways. In one embodiment, the whole laser element is pushed from, for example, the bottom so that it extends out of the housing. The step of pushing the laser element turns on the light. The step of pushing the laser back into the housing turns off the laser light. In another configuration, a switch element can be provided which is activated when the fastener installation tool engages a work surface. Removal of the fastener installation tool from the work surface would then turn off the laser light. In another configuration, a switch can be provided on the handle of the tool. In still another configuration, the light can be activated by twisting the mounting piece and the tool relative to one another. In still another configuration, a Bluetooth switch can be provided. In yet another configuration, a switch can be provided which is related to the spinning mandrel inside the tool. Spinning of the mandrel would activate the switch and turn on the laser.

**FIG. 3C** is a view of the position indicator tool **300** of **FIG. 3A** from a second side showing a concave curved interior surface. **FIG. 3D** illustrates the position indicator tool **300** rotated 90 degrees from the view in **FIG. 3B**. From this view, the open end **302** with its semi-circular shape and flanges **350** that extend away from a centerline is apparent. The position indicator tool **300** could also have tongue and groove features as shown on the bubble level mount.

### TELESCOPING ADAPTERS

**FIG. 4A** illustrates the fastener installation tool **100** with a driver **490** and a telescoping adapter **410.** The fastener installation tool **100** engages the telescoping adapter **410** at a distal end **4.** The proximal end **2** of the telescoping adapter **410** engages the driver **490.** The driver **490** is any suitable tool, such as a heavy-duty hand tool. Suitable heavy duty tools include, for example, power drills.

**FIG. 4B** is a close-up of a portion of the telescoping adapter **410.** The telescoping adapter has a first tubular member **412** and a second tubular member **414** that fits within the interior of the first tubular member **412.** The first tubular member **412** can have a larger diameter than the second tubular member **414.** The two tubular members can be keyed to control movement of the first tubular member **412** with respect to the second tubular member **414.** The keyed feature can act as a forward and backward stop position. An elongated channel **416** or slot is formed in the second tubular member **414.** A keying member **420** is provided which has an elongated body **422** to fit within the elongated channel **416** and a raised element **420** which is sized to fit within an aperture **418** in the first tubular member **412.** The elongated body **422** of the keying member **420** is passed through the aperture **418** in the first tubular member **412.** The elongated body **422** is configured to sit within the elongated channel **416.** Once the elongated body **422** is positioned within the elongated channel **416,** the raised element **420** sits within the aperture **418.** The top surface **426** of the raised element **420** can be flush with the exterior surface of the first tubular member **412** or extend above the exterior surface of the first tubular member **412.** One or more securement devices (not shown), such as screws, can be used to secure the keying member **420** securely in position. The securement devices would pass through the apertures **422, 424** in the first tubular member **412** and the keying member **420.**

**FIG. 4C** is a close-up of a proximal end 2 of the telescoping adapter **410.** A drill chuck **460** engages the mandrel **450** which spins freely within the telescoping tube **454.**

**FIG. 4D** shows a cross-section of the telescoping adapter **410** with the mandrel **450** at the proximal end and the bit **452** towards the distal end, where the bit **452** engages the fastener **80.**

### USE OF DEVICES AND SYSTEMS

**FIGS. 5A-E** illustrate fastener installation tools in use when installing fasteners to, for example, wood framing components. The projections **116** act as forks to stabilize the tool during use while the fastener is being driven into, for example, the rafters.

As shown for illustration in **FIGS. 5A-D****,** a rafter **10** is adjacent a top plate **20.** A vertical stud **30** engages the top plate **20** at a 90 degree angle. Movement of the fastener installation tool **100** changes the orientation of the angled markers **142, 144** so that one of the markers is parallel to either the top plate **20** or the vertical stud **30.** As shown in **FIG. 5A**, the angled marker **142** is positioned approximately parallel to the vertical stud **30.** Because the angled marker **142** is visually distinct from the body of the fastener installation tool **100,** the user can readily assess the position of the marker **142,** for example, to the vertical stud **30.** The front face of the top plate **20** and the stud **30** are essentially flush. The angled markers **142** provide a visual references, for example, to the target surface. Positioning either of the angled markers **142** so that they are vertical, for example, ensures a correct angle of installation of the screw **80.** Further, the angled markers **142** can be visually compared to other vertical surfaces or edges within the line of sight by the user. Another feature of the design is that the interiorly positioned notches **117, 117'** are angled to allow easy and comfortable engagement with the top plate **20** as shown in **FIG. 5A**. This provides tactile feedback to the user that the tool is positioned securely.

In **FIG. 5A****,** the fastener installation tool **100** attached to a telescoping adapter **410** engages a side surface **22** of a top plate **20** at an angle. The fastener installation tool **100** is positioned so that one of the interiorly positioned notches **117** of a projection **116** is positioned on the side surface **22** of the top plate **20** while the second projection **116'** is positioned on the lower surface **24** of the top plate **20.** The distal tip of the fastener **80** extends beyond the recessed face of the channel **115.** The user can move the telescoping adapter **410** upward to change the angle of attack of the fastener installation tool **100** and the fastener **80.** Additionally, the user can move the telescoping adapter **410** from side-to side to change the angle of attack of the fastener installation tool **100** and the fastener **80.**

Turning to **FIG. 5B****,** the fastener installation tool **100** is shown attached to a telescoping adapter **410** turned 90 degrees from the deployment illustrated in FIG. **5A** and at the intersection between the top plate **20** and the vertical stud **30.** Additionally, a level tool **200** is positioned on the telescoping adapter **410** immediately below the fastener installation tool **100.** In use, the user can move the telescoping adapted forward and backward so that a rocker **130** engages a surface **32** of the vertical stud **30.** The level tool **200** is positioned so that the user can look up at the level tool **200** to determine whether the tool itself is at a desired orientation.

**FIG. 5C** illustrates the fastener installation tool **100** engaging a telescoping adapter **410.** The fastener installation tool engages the top plate **20** on the lower surface **24** and the vertical stud **30** on a second surface **34.** The rocker **130** and the visual indicator **112** allow the user to essentially aim for the center of the rafter. When the rafter is not centered over the stud, the user can utilize the rocker **130** engagement to quickly and easily adjust the angle of installation as needed. In some configurations, the telescoping adapter **410** and fastener installation tool **100** are moved towards and away **60** the vertical stud **30.**

**FIG. 5D** illustrates the fastener installation tool **100** attached to a telescoping adapter **410.** Additionally, a position indicator tool **300** is positioned on the telescoping adapter **410** immediately below the fastener installation tool **100.** The fastener installation tool **100** is shown positioned away from the intersection between the top plate **20** and the vertical stud **30.** In use, the laser element **330** is activated so that a light beam **332** is generated. The light beam **332** from the laser element **330** provides the user with visual feedback of the relative location of where the fastener will penetrate the top plate **20.** For purposes of illustration, the position indicator tool **300** is shown below the lower surface of the top plate **20.** However, in use the position indicator tool **300** would allow for installation from the side of a stud **30** and below a rafter **10.** So the vertical installation illustrated is for ease of reference, as would be appreciated by those skilled in the art. In use, the position indicator tool **300** would allow for installation at angles other than perpendicular.

Prior to engagement of the fastener installation tool **100** with, for example, the top plate **20** of the roof support structure, a fastener **80** is placed into a fastener channel with the fastener head proximate to or engaging with a coupler. A portion of the fastener **80** is typically initially received in a chamber of the telescoping adapter **410** adjacent the distal end **4.** A mandrel **450** is proximate the proximal opening of the telescoping adapter **410.** It will be appreciated that the fastener installation tool **100** as properly positioned on the distal end **4** of the telescoping adapter **410** provides an entry point and for the fastener **80** as the fastener **80** is driven through the top plate **20** into the roof support member with the application of torque from the driver **490.** The driver **490** can be easily dismounted from the telescoping adapter **410.** The telescoping adapter **410** may employ a receiver configured to receive and functionally attach to a wide range of dismountable drill guns without the torque driver **490** being fully integrated with the telescoping adapter **410,** as will be appreciated by those skilled in the art.

**FIG. 5E** is a close-up cut-away of the fastener installation tool **100** with the distal end engaging the top plate **20,** and a side surface of the fastener installation tool **100** engaging the side of the vertical stud **30.** The fastener is positioned in the central channel. **h** is a dimension that is parallel to the center axis of the tool and the fastener. **y** is the short side of the triangle formed between the vertical stud **30** and **h,** and Θ is the angle between the vertical member **30** and **h.**

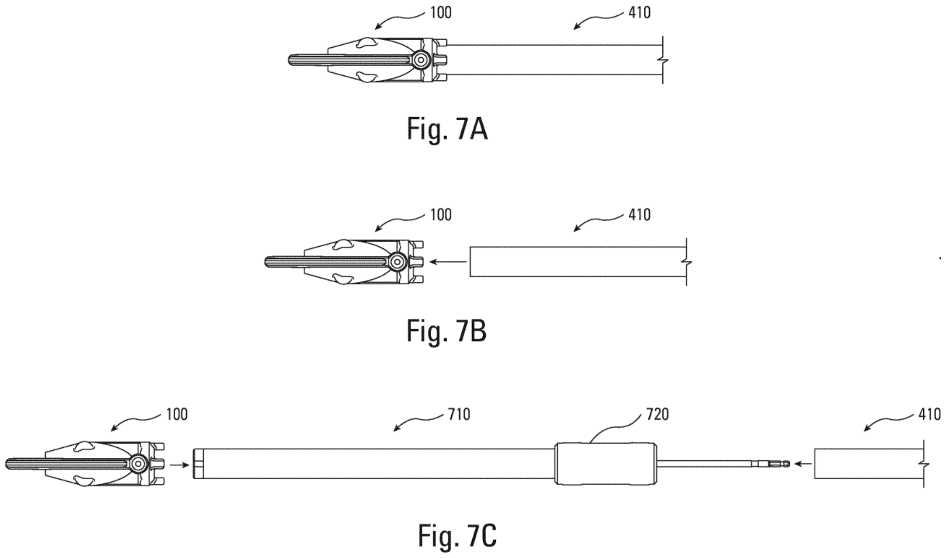

Turning now to **FIGS. 7A-E** a fastener installation tool **100** is illustrated connected to telescoping adapter **419** in **FIG. 7A****.** As described above, the fastener installation tool **100** can be removed from the telescoping adapter **410** as shown in **FIG. 7B**. In some use situations, additional distance between the fastener installation tool **100** and the driver **490** (shown in **FIG. 4A**) may be desirable. Where additional distance is desirable, the fastener installation tool **100** engages a secondary extension **710** via an extension connector **720.**

The fastener installation tool **100** can be part of a modular system which is connected to one or more secondary extensions **710** via one or more extension connectors **720.** The modular configuration allows the tool to be used at a variety of distances away from the user. This allows the user to secure framing components at a target angle while remaining on the ground, thus eliminating the need to climb on a ladder to secure framing components or achieve a target angle of the fastener.

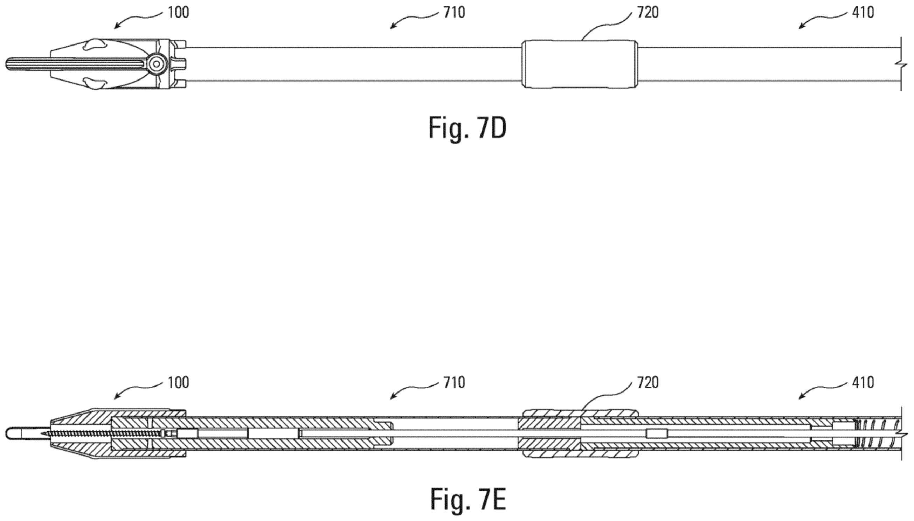

**FIG. 7C** illustrates the fastener installation tool **100,** the secondary extension **710,** the extension connector **720** and the telescoping adapter **410..** When the components are connected, the fastener installation tool **100** engages the secondary extension **710** at the proximal end of the fastener installation tool **100** and the distal end of the secondary extension **710.** The secondary extension **710** engages the extension connector **720** at the proximal end of the secondary extension **710** and the distal end of the extension connector **720.** The extension connector **720** engages the telescoping adapter **410** at the proximal end of the extension connector **720** and the distal end of the telescoping adapter **410.** **FIG. 7D** illustrates a side-view of the connection between the secondary extension **710,** extension connector **720** and the telescoping adapter **410.** A cross-section of the fastener engaging the extension and the adapter is illustrated in **FIG. 7E****.** As illustrated, the secondary extension **710** and the telescoping adapter **410** fit within an interior of the extension connector **720.**

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

The following clauses describe further preferred aspects of the present invention:
1. A fastener installation system for fastening a first member to a second member comprising:
   an elongated adapter having a proximal end and a distal end;
   a driver which generates torque mounted to a first end of the elongated adapter;
   a torque transfer unit engaging the elongated adapter and the driver to transfer torque produced by said driver to a fastener; and
   a fastener installation tool engaging the distal end of the elongated adapter having a body comprising:
      a first member wherein the first member has a substantially planar profile in a first plane;
      a positioning member formed integrally with the first member wherein the positioning member has a rocker positioned along a length of the positioning member between a channel face of the first member and a distal end of the positioning member on a first side;
      an axial channel passing from the distal end of the fastener installation tool to the proximal end; and
   at least one of a linear marker on an exterior surface of the body in the first plane and an angled marker on the exterior surface of the body in the second plane.
2. The fastener installation system of clause 1, wherein the elongated adapter is a telescoping tube assembly.
3. The fastener installation system of clause **2,** wherein said telescopic tube assembly further comprises a keyway.
4. The fastener installation system of clause 2 or clause **3,** wherein the telescoping tube assembly comprises a first tubular member configurable to engage the driver and slidably engageable with a second tubular member.
5. The fastener installation system of any one of the preceding clauses, wherein at least one of the first members has a notch at a distal end on a channel-facing side.
6. The fastener installation system of any one of the preceding clauses further comprising a position indicator tool removably engaging the elongated adapter.
7. The fastener installation system of clause 6 wherein the position indicator tool further comprises a pair of mounting members engaging a partially fluid filled vial.
8. The fastener installation system of clause 6 or clause **7,** wherein the position indicator tool further comprises a laser pointer.
9. The fastener installation system of any one of the preceding clauses, wherein the driver is one of a battery powered drill and a drill with an electrical cord.
10. The fastener installation system of any one of the preceding clauses further comprising one or more secondary extensions and one or more extension connectors, wherein the one or more secondary extensions and one or more extension connectors modularly engage the elongated adapter.
11. A fastener installation tool engaging the distal end of the elongated adapter having a body comprising:
   a first member having a substantially planar profile in a first plane;
   a positioning member formed integrally with the first member wherein the positioning member has a rocker positioned along a length of the positioning member between a channel face of the first member and a distal end of the positioning member on a first side;
   an axial channel passing from the distal end of the fastener installation tool to the proximal end.
12. The fastener installation tool of clause **11** wherein the first member has a notch at a distal end on a channel-facing side.
13. The fastener installation tool of clause **11** wherein the distal end of the first member is one of curved, flat, angled, and tapered.
14. The fastener installation tool of clause **11** wherein the positioning member has a rocker positioned along a length of the positioning member between a channel face of the first member and a distal end of the positioning member on a first side.
15. The fastener installation tool of clause **14** wherein the positioning member has a second rocker positioned along a length of the positioning member between the channel face of the first member and the distal end of the positioning member on a second side.
16. The fastener installation tool of clause **15** wherein the second rocker has an hourglass shape.
17. The fastener installation tool of clause **11** or clause 14, further comprising one or more linear markers and one or more angled markers wherein at least one of the one or more linear markers is positioned on an exterior surface in the first plane and one or more angled marker are positioned on the exterior surface in the second plane and further wherein the one or more linear markers and one or more angled markers are visually distinct from a remainder of the body of the fastener installation tool.
18. The fastener installation tool of clause **11** wherein a linear marker is positioned on a first side of the body and a second side of the body.
19. The fastener installation tool of clause **11** wherein a linear marker has a length greater than 50% of the length of the body of the fastener installation tool.
20. The fastener installation tool of clause **11** wherein an angled marker is positioned on a first side of the body and a second side of the body.
21. The fastener installation tool of clause **11** wherein an angled marker is positioned proximal to the rocker.
22. A fastener installation tool engaging a distal end of an elongated adapter having a body comprising:
   a first member comprising a pair of engagement members having a substantially planar profile in a first plane;
   a positioning member formed integrally with the first member wherein the positioning member has a rocker positioned along a length of the positioning member between a channel face of the first member and a distal end of the positioning member on a first side;
   an axial channel passing from the distal end of the fastener installation tool to the proximal end.
23. The fastener installation tool of clause **11** or clause 22, wherein the first member has a notch at a distal end on a channel-facing side.
24. The fastener installation tool of clause **11, 22** or **23,** wherein the distal end of the first member is one of curved, flat, angled, and tapered.
25. The fastener installation tool of clause **11** or **22** to **24,** wherein the positioning member has a second rocker positioned along a length of the positioning member between the channel face of the first member and the distal end of the positioning member on a second side.
26. The fastener installation tool of clause **11** or **22** to **25,** wherein the rocker has an hourglass shape.
27. The fastener installation tool of clause **22** to **26,** further comprising at least one of a linear marker on an exterior surface of the body in the first plane and an angled marker on the exterior surface of the body in the second plane.
28. The fastener installation tool of clause **27** wherein at least one of the linear marker on an exterior surface in the first plane and the angled marker on the exterior surface in the second plane are visually distinct from a remainder of the body of the fastener installation tool.
29. The fastener installation tool of clause **27** wherein a linear marker is positioned on a first side of the body and a second side of the body.
30. The fastener installation tool of clause **27** wherein a linear marker has a length greater than 50% of the length of the body of the fastener installation tool.
31. The fastener installation tool of clauses **11** to **14, 17, 27** or **28,** wherein the angled marker is positioned on a first side of the body and a second side of the body.
32. The fastener installation tool of clause **27** wherein the angled marker is positioned proximal to the rocker.
33. The fastener installation tool of any one of claims **11, 14, 17** or **27, 28** and **31,** wherein a linear marker has a length greater than 50% of the length of the body of the fastener installation tool.
34. The fastener installation tool of any one of claims **11, 14, 17** or **27, 28, 31** and **33,** wherein an or the angled marker is positioned on a first side of the body and a second side of the body.
35. The fastener installation tool of any one of claims **11, 14, 17** or **27, 28, 31, 33** and **34,** wherein an or the angled marker is positioned proximal to the rocker.
36. A removable position indicator tool comprising:
   a semicircular body having a first end, a second end, a convex exterior surface, and a concave interior surface;
   a mounting member extending from the convex exterior surface; and
   wherein at least one of the first end and the second end has a tongue and groove shaped surface.
37. The removable position indicator tool of clause **36,** further comprising a sealed vial secured by the mounting member.
38. The removable position indicator tool of clause **36** or 37, further comprising a laser pointer secured by the mounting member.
39. The removable position indicator tool of clauses **36** to 38further comprising at least one flange.
40. The removable position indicator tool of clauses **36** to 39, wherein the mounting member further comprises a first mounting member and a second mounting member and further wherein the first mounting member is positioned on the convex exterior surface in a first position and the second mounting member is positioned on the convex exterior surface in a second position offset by about 1.97 inch to the central axis of the removable position indicator tool.

## Claims

1. A position indicator tool (300) comprising: a semicircular body having a first end, a second end, a convex exterior surface, and a concave interior surface; a mounting member (210, 220) extending from the convex exterior surface; and a level tool (200) engaged by the mounting member (210, 220) on the convex exterior surface.

2. The position indicator (300) tool of claim 1, wherein the level tool (200) comprises a sealed vial (230).

3. The position indicator tool (300) of claim 1 or 2 comprising a laser pointer.

4. The position indicator tool (300) of claim 2, wherein the mounting member (210, 220) further comprises a first mounting member (210) and a second mounting member (220), further wherein the first mounting member (210) is positioned on the convex exterior surface in a first position and the second mounting member (220) is positioned on the convex exterior surface in a second position offset to a central axis of the position indicator tool (300).

5. The position indicator tool (300) of claim 1 wherein the level tool (200) comprises a laser element (330) generating a laser beam (332), preferably the position indication tool (300) comprises a mounting (320) for accommodating the laser element (330) and a flange (350, 350') being provided on either side of an open end (302) of the level tool (300), preferably the laser element (330) extends beyond an upper surface of the mounting (320).

6. The position indicator tool (300) of claim 1 further comprising a flange (350) on at least one of the first straight side of the semicircular body and the second straight side of the semicircular body.

7. The position indicator tool of any one of claims 1 to 6, wherein at least one of the first end and the second end has a tongue and groove (252) shaped surface.

8. The position indicator tool of any one of claims 1 to 7, wherein the first end is a first curved end and the second end is a second curved end, and wherein preferably the semicircular body comprises a first straight side and a second straight side.

9. The position indicator (300) tool of claim 2, wherein the sealed vial (230) secured is by the mounting member (210, 220).

10. The position indicator tool (300) of claim 3, wherein the laser pointer is secured by the mounting member (210, 220).

11. The position indicator tool (300) of claim 3, wherein the second position is offset by about 1.97 inch (50 mm).

12. The position indicator tool (300) of claim 5, wherein the open end (320) with its semi-circular shape and flanges (350) extends away from a centerline.

13. A method of using a position indicator tool (300) according to any one of claims 1 to 12 comprising the steps of: attaching a position indicator tool (300) comprising a semicircular body having a first end, a second end, a convex exterior surface, and a concave interior surface, a mounting member (210, 220) extending from the convex exterior surface, and a level tool (200) engaged by the mounting member(210, 220) on the convex exterior surface to a telescoping adapter (410); preferably positioning the level tool (200) to the telescoping adapter (410) immediately below a faster installation tool (100); positioning a distal end of the telescoping adapter (410) on a surface, preferably the surface of a vertical stud (30); and determining whether the tool is at a desired orientation.

14. The method of using a position indicator tool (300) of claim 13 further comprising the steps of: adjusting a position of the distal end of the telescoping adapter (410) to adjust a level indication of the level tool (200) and/or moving the telescoping adapter (410) and the fastener installation tool (100) towards and away the vertical stud (30).

15. The method of using a position indicator tool (300) of claim 13, wherein the position indicator tool (300) further comprises a laser pointer further comprising the steps of: activating the laser element (330) which is preferably the laser pointer; determining a location of a light beam (332) from the laser pointer on a surface; and determining a visual feedback from a light beam (332) from the laser element (330).

16. The method of using a position indicator tool (300) of claim 13, wherein the position indicator tool (300) further comprises a flange (250, 250') comprising the steps of: engaging the flange (250, 250') to install or remove the position indicator tool from the circular surface and/or removably engaging the flange (250, 250') of the level tool (200) to the tubular member (412).

17. The method of using a position indicator tool (300) of claim 13, wherein the mounting member (210, 220) further comprises a first mounting member (210) and a second mounting member (220), further wherein the first mounting member (210) is positioned on the convex exterior surface in a first position and the second mounting member (220) is positioned on the convex exterior surface in a second position offset the first position and the level tool (200) comprises a sealed vial (230), further wherein the sealed vial (230) engages the first mounting member (210) and the second mounting member (220) to achieve a position at an angle off a central axis of the position indicator tool (300).
